# EUROPEAN PATENT APPLICATION

(11) **EP 4 592 115 A1**
(43) Date of publication of application: **30.07.2025**
(21) Application number: 24153987.3
(22) Date of filing: 25.01.2024
(51) Int. Cl.: B60K 1/00, F16H 48/10, B60K 7/00, H02K 7/116

(54) **DRIVE MODULE AND AXLE ASSEMBLY FOR AN ELECTRIC VEHICLE, AND ELECTRIC VEHICLE**

(71) Applicant: Volvo Car Corporation, 405 31 Göteborg (SE)
(72) Inventor: SILVA PEREIRA, Luiz Filipe, 40531 Göteborg (SE); STEN, Erik, 40531 Göteborg (SE)
(74) Representative: Maiwald GmbH

(57) **Abstract**

The disclosure relates to a drive module (20) for an electric vehicle. The drive module (20) comprises an electric machine (22) having a rotor (28) and a stator (30), wherein the rotor (28) is at least partially ring-shaped and defines a reception space (32) provided radially and axially inside the rotor (28). The drive module (20) also comprises a differential gear unit (34). Moreover, the drive module (20) comprises a first single-stage cylindrical gear unit (36) having a first output interface (40) configured to be drivingly coupled to a wheel (18a) and a second single-stage cylindrical gear unit (38) having a second output interface (44) configured to be drivingly coupled to a wheel (18b). The differential gear unit (34) is at least partially arranged in the reception space (32) and the differential gear unit (34) is drivingly coupled to the rotor (28). The first cylindrical gear unit (36) and the second cylindrical gear unit (38) are drivingly coupled to the differential gear unit (34). Furthermore, an axle assembly (16) for an electric vehicle, and an electric vehicle are shown.

## Description

### TECHNICAL FIELD

The present disclosure relates to a drive module for an electric vehicle. The drive module comprises an electric machine having a rotor and a stator.

The present disclosure additionally is directed to an axle assembly for an electric vehicle. The axle assembly comprises such a drive module.

Moreover, the present disclosure relates to an electric vehicle comprising such a drive module and/or such an axle assembly.

### BACKGROUND ART

In the field of electric vehicles, axle assemblies which combine an electric machine, a differential gear unit and optionally other gear stages are known. Such vehicle axle assemblies are often provided as modules for electric vehicles.

### SUMMARY

It is an objective of the present disclosure to further improve such axle assemblies for electric vehicles.

The problem is at least partially solved or alleviated by the subject matter of the independent claims of the present disclosure, wherein further examples are incorporated in the dependent claims.

According to a first aspect, there is provided a drive module for an electric vehicle. The drive module comprises an electric machine having a rotor and a stator. The rotor is at least partially ring-shaped and defines a reception space provided radially and axially inside the rotor. Moreover, the drive module comprises a differential gear unit. Furthermore, the drive module comprises a first single-stage cylindrical gear unit having a first output interface configured to be drivingly coupled to a wheel and a second single-stage cylindrical gear unit having a second output interface configured to be drivingly coupled to a wheel. The differential gear unit is at least partially arranged in the reception space. The differential gear unit is drivingly coupled to the rotor. The first cylindrical gear unit and the second cylindrical gear unit are arranged on opposite sides of the differential gear unit, and the first cylindrical gear unit and the second cylindrical gear unit are drivingly coupled to the differential gear unit. In this context, a module is to be understood as a contiguous unit. This means that all the components of the drive module are interconnected and may be mounted in an electric vehicle in one step. The fact that the differential gear unit is at least partially arranged in the reception space renders the drive module compact. Furthermore, in the present drive module, the electric machine is arranged at an input side of the differential gear unit and the cylindrical gear units are arranged on respective output sides of the differential gear unit. Each of the cylindrical gear units is configured to be drivingly coupled to a single wheel. Consequently, especially when compared to a drive unit in which a gear stage is arranged between the electric machine and the differential gear unit, the cylindrical gear units only need to support a comparatively low driving power, i.e. comparatively low torques. This is due to the fact that each of the cylindrical gear units only needs to transmit the power to one single wheel. Thus, in an ideal configuration, each of the cylindrical gear units only needs to transmit half of the power to be transmitted by the drive module as a whole. This has the effect that the cylindrical gear units may be designed in a compact and light-weight manner. Moreover, this allows to use comparatively small teeth on the gears forming the cylindrical gear units, i.e. allows to use small gear modules. This is advantageous in terms of noise, vibration and harshness (NVH), i.e. such cylindrical gear units generate comparatively little noise, vibrations and harshness when being operated. A further advantage of cylindrical gear units is structural simplicity. This is especially the case when comparing cylindrical gear units to planetary gear units. According to the present disclosure, the drive module comprises two single-stage cylindrical gear units. This means that each of the cylindrical gear units comprises two meshing gears only. Such cylindrical gear units have the advantage of comparatively low mechanical losses. This is especially the case when comparing a single-stage cylindrical gear unit to a cylindrical gear unit having more than two gear stages. Overall, the drive module according to the present disclosure is structurally simple, compact, and very efficient. At the same time, the drive module is capable of supporting usual loads, i.e. usual power levels, used in electric vehicles. The structural simplicity and the compactness additionally allow to produce such a drive module at comparatively low costs.

In the context of the present disclosure, a cylindrical gear unit is to be understood as unit or assembly comprising at least two cylindrical gears meshing with each other. Cylindrical gears are gears having a cylindrical pitch surface. In simplified words, the surface on which the teeth are provided has the form of a lateral surface of a circular cylinder. An example of a cylindrical gear is a spur gear. A spur gear is characterized in that the teeth extend substantially parallel to an axial direction, i.e. substantially parallel to a middle axis of the gear. Another example of a cylindrical gear is a helical gear. A helical gear is characterized in that the teeth are inclined with respect to an axial direction, i.e. inclined with respect to a middle axis of the gear.

It is noted that in the drive module of the present disclosure, the first output interface and the second output interface have a common middle axis. Thus, the drive unit is well-adapted to be used in an axle assembly for an electric vehicle.

According to an example, at least one gear of the first cylindrical gear unit is at least partially made of sintered material. It is also possible that this gear is completely made of a sintered material. Additionally or alternatively, at least one gear of the second cylindrical gear unit is at least partially made of sintered material. It is also possible that this gear is entirely made of a sintered material. Gears made of a sintered material are advantageous in that they may be formed with high geometrical flexibility.

As far as the electric machine is concerned, the present disclosure is not limited to a specific type of an electric machine. This means that the electric machine of the drive module according to the present disclosure may be a permanent magnet machine, an axial flux machine, an inner permanent magnet machine, a surface permanent magnet machine, an asynchronous machine, a SynRM machine or any other suitable electric machine.

In this context it is understood that the electric machine of the present disclosure may be operated as an electric motor or as an electric generator.

According to an example, the electric machine has a diameter which is big when being compared to an axial length of the electric machine. Put otherwise, the electric machine has an axial length that is small when compared to the diameter of the electric machine. This renders to drive module compact. In an example, a diameter of the electric machine may be larger than an axial length of the electric machine. In an example, the diameter of the electric machine is 250 mm or larger and the axial length of the electric machine is 150 mm or less. Such an electric machine may as well be characterized by a form factor of 1.67 or more, wherein the form factor corresponds to the diameter divided by the axial length.

In an example, the differential gear unit is completely received in the reception space. In such a case, the drive module is particularly compact. This leads to a particularly high capability of integrating the drive module into a vehicle. In other words, if the drive module is compact, it may be arranged in small and/or confined spaces within an electric vehicle.

According to an example, the differential gear unit comprises a planetary gear arrangement, a cylindrical gear arrangement or a bevel gear arrangement. In this context, a differential gear unit comprising a planetary gear arrangement is to be understood as a differential gear unit comprising a planetary gear stage. Thus, the functionality of the differential gear unit is provided by the planetary gear stage. Similarly, a differential gear unit comprising a cylindrical gear arrangement is to be understood as a differential gear unit comprising one or more cylindrical gear stages. Thus, the functionality of differential gear unit is provided by the one or more cylindrical gear stages. In the same manner, a differential gear unit comprising a bevel gear arrangement is to be understood as a differential unit comprising one or more bevel gear stages. Thus, the functionality of the differential gear unit is provided by the one or more bevel gear stages. In all of these examples, the functionality of a differential gear unit may be provided with high reliability and efficiency.

In an example, the differential gear unit comprises a housing having a substantially constant wall thickness. Additionally or alternatively, the differential gear unit comprises a housing made of a sheet material. A housing having a substantially constant wall thickness is particularly suitable for being made of a sheet material. The sheet material may be a sheet metal, e.g. made from a steel alloy or an aluminum alloy. Moreover, a housing having a substantially constant wall thickness is structurally simple. Consequently, it may be produced in a cost-efficient manner. This applies to a particular extent in case the housing is made of a sheet material. Such a housing may additionally be light-weight.

According to an example, an interior of the housing is sealed with respect to an exterior of the housing in an oil-tight manner. This means that the differential gear unit which is arranged in the interior of the housing is sealed with respect to the electric machine, especially the rotor and the stator, in an oil-tight manner. Thus, the differential gear unit may be operated in an efficient manner which involves the use of lubricant such as oil. At the same time the functionality of the electric machine is not compromised by the lubricant, e.g. oil.

In an example, the differential gear unit is axially centered within the rotor. Consequently, a subassembly of the drive module comprising the differential gear unit and the rotor is balanced along a middle axis of the rotor and the differential gear unit. This enhances the operation of this subassembly in terms of NVH.

According to an example, the first cylindrical gear unit and the second cylindrical gear unit are arranged symmetrically with respect to the electric machine and/or with respect to the differential gear unit. This configuration leads to the fact that the drive module is balanced along a middle axis of the electric machine. Moreover, this allows to symmetrically arrange the drive module in an electric vehicle, i.e. to arrange the drive module at a center of a width of the electric vehicle. Thus, a distance between the cylindrical gear units and the respectively associated wheels is the same on both sides. Consequently, drive shafts used for driving the wheels may have the same length. This avoids the effect of so-called torque steer which essentially results from unequal lengths of such drive shafts. This leads to a safe driving behavior of an electric vehicle equipped with the drive module.

In an example, the differential gear unit comprises a first output shaft rotatable around a first middle axis. The first cylindrical gear unit comprises a first input shaft. The first output shaft and the first input shaft are formed integrally. Additionally or alternatively, the differential gear unit comprises a second output shaft rotatable around a second axis of rotation. The second cylindrical gear unit comprises a second input shaft. The second output shaft and the second input shaft are formed integrally. In an example, the first middle axis and the second axis of rotation coincide. Integrally forming the above-mentioned shafts simplifies the structure of the drive module. Moreover, integrally forming the above-mentioned shafts allows for a compact design of the drive module. Additionally, forming shafts integrally instead of drivingly connecting these shafts enhances operational efficiency.

In an example, an axial bearing is arranged axially between the first output shaft and the second output shaft. Consequently, using the axial bearing, axial reaction forces occurring within the drive module may be balanced. This is especially useful in cases in which the cylindrical gear unit comprises helical gears, in particular in cases in which a direction of inclination of a helical gear on the first output shaft and a direction of inclination of a helical gear on the second output shaft are oriented opposite to one another such that the axial reaction force acting on the first output shaft is directed towards the second output shaft and the axial reaction force acting on the second output shaft is directed towards the first output shaft.

According to an example, each of the first output shaft and the second output shaft is radially supported on a drive module housing at two axially separate positions. This means that each of the first output shaft and the second output shaft is radially supported on the drive module housing at exactly two axially separate positions. Thus, the support of the first output shaft and the second output shaft reliably and precisely defines a position of the first output shaft and the second output shaft. Additionally, rotation is allowed. At the same time, the number of positions at which the first output shaft and the second output shaft are supported corresponds to the theoretic minimum. Since at each support position losses occur, this also means that such a configuration generates comparatively low losses, i.e. a comparatively high efficiency. It is noted that in this context, the support may be direct or indirect, e.g. via the differential gear unit housing. Moreover, using less positions of support renders the drive module structurally simpler and cheaper.

According to an example, a middle axis of the first output interface and a middle axis of the second output interface are offset from a middle axis of the electric machine. Optionally, a dimension of the offset may be chosen by choosing the cylindrical gear units accordingly. Having such an offset leads to outer dimensions of the drive module that are advantageous for packaging inside an electric vehicle. Varying the dimension of the offset additionally provides packaging flexibility. For example, an inclination of drive shafts connecting one of the output interfaces to an associated wheel can be modified by modifying the offset. Altogether, the drive module is configured to be integrated in different types of electric vehicles.

In an example, each of the first cylindrical gear unit and the second cylindrical gear unit has a gear ratio of 5:1 or more. In an example, the first cylindrical gear unit and the second cylindrical unit have a gear ratio of 6:1 or more. Thus, the first cylindrical gear unit and the second cylindrical gear unit are suitable for providing the necessary reduction in an electric vehicle. The fact that this reduction is provided by single-stage cylindrical gear units enhances operational efficiency as has already been mentioned before.

In an example, each of the first cylindrical gear unit and the second cylindrical gear unit comprises helical gears. Helical gears have the advantage of an enhanced load-bearing capacity, especially as compared to standard spur gears, i.e. gears having teeth substantially extending parallel to an axial direction. This advantage also is used in the drive module. The teeth of the helical gears of the first cylindrical gear unit may be inclined in one direction and the teeth of the helical gears of the second cylindrical gear unit may be inclined in an opposite direction. These directions may be directed towards each other. In such a case, the axial reaction forces which result from the use of the helical gears may be supported in a simple and reliable manner.

According to a second aspect, there is provided an axle assembly for an electric vehicle. The axle assembly comprises a drive module according to the present disclosure. Moreover, the axle assembly comprises a first wheel drivingly coupled to the first output interface via a first drive shaft and a second wheel drivingly coupled to the second output interface via a second drive shaft. An axial length of the first drive shaft equals an axial length of the second drive shaft. It is understood that in this context, the wheels are road wheels. Due to the fact that the drive module is structurally simple and compact, also the axle assembly is compact. Moreover, the advantages of the drive module in terms of noise, vibration and harshness (NVH) also translate to the axle assembly as a whole. The same applies to efficiency. The equal lengths of the first drive shaft and the second drive shaft avoid the effect of so-called torque steer. This leads to a safe driving behavior of an electric vehicle equipped with the axle assembly.

According to a third aspect, there is provided an electric vehicle comprising a drive module according to the present disclosure and/or an axle assembly according to the present disclosure. Thus, a drivetrain of such an electric vehicle is structurally simple and compact. Moreover, the advantages of the drive module and/or the axle assembly in terms of noise, vibration and harshness (NVH) also translate to the electric vehicle as a whole. The same applies to efficiency. Moreover, such an electric vehicle has a safe driving behavior.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows an electric vehicle according to the present disclosure comprising an axle assembly according to the present disclosure and a drive module according to the present disclosure,
- Figure 2: shows the axle assembly of Figure 1 in a more detailed, partially sectional view,
- Figure 3: shows the drive module of Figures 1 and 2 in a more detailed, partially sectional view,
- Figure 4: shows a drive module according to another example, wherein the view of Figure 4 corresponds to a detail IV of the drive module of Figure 3, and
- Figure 5: shows a sub-assembly of the drive module of Figures 3 in a perspective view.

### DETAILED DESCRIPTION

The Figures are merely schematic representations and serve only to illustrate examples of the disclosure. Identical or equivalent elements are in principle provided with the same reference signs.

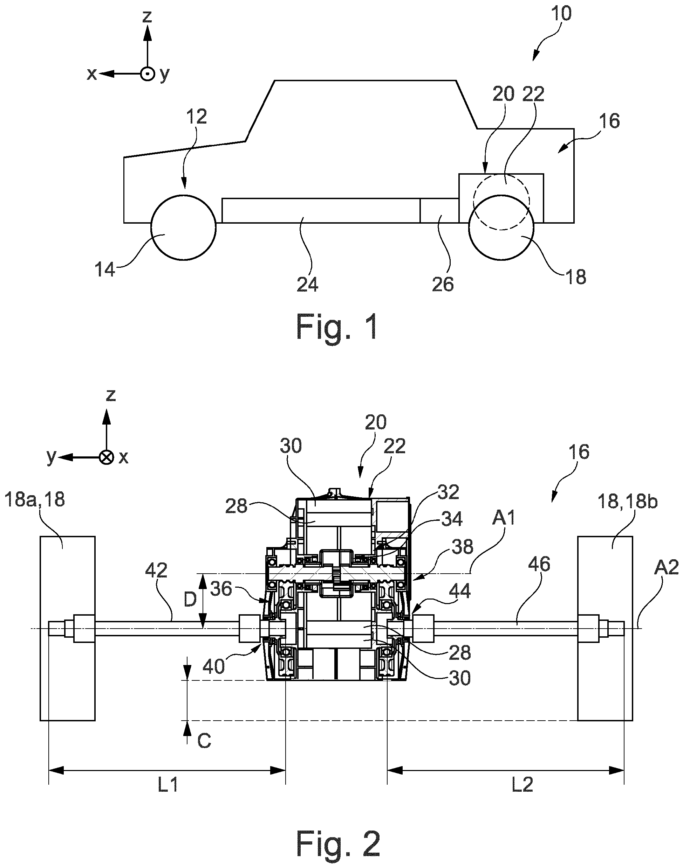

Figure 1 show an electric vehicle 10.

The electric vehicle 10 has a front axle assembly 12 comprising front wheels 14 and a rear axle assembly 16 comprising rear wheels 18.

The electric vehicle 10 of the example shown in Figure 1 is a rear-wheel drive vehicle.

This means that the rear axle assembly 16 comprises a drive module 20 with an electric machine 22 configured to drive the rear wheels 18.

To this end, the electric vehicle 10 also comprises a traction battery 24 and an inverter unit 26. Thus, the electric machine 22 may be powered by the traction battery 24 via the inverter unit 26.

Moreover, in the present example, a vehicle coordinate system is defined as follows: an X axis extends along a standard forward driving direction of the electric vehicle 10. A Y axis extends along a width direction of the electric vehicle 10. In the present example, the Y axis extends from right to left when considering the standard forward driving direction of the electric vehicle 10. A Z axis extends along a height direction of the electric vehicle 10.

The rear axle assembly 16 is shown in more detail in Figure 2. For the ease of explanation, the rear axle assembly 16 will be simply called an axle assembly 16 in the following.

As has been mentioned before, the axle assembly 16 comprises the drive module 20 and the drive module 20 comprises the electric machine 22.

The electric machine 22 has a rotor 28 and a stator 30. The rotor 28 is arranged within the stator 30 and is able to rotate around a first axis A1 of rotation. Thus, the first axis A1 of rotation corresponds to a middle axis of the electric machine 22. The rotor 28 is ring-shaped and defines a reception space 32 provided radially and axially inside the rotor 28.

Moreover, the drive module 20 comprises a differential gear unit 34 which is arranged in the reception space 32 and which is drivingly coupled to the rotor 28 as will be explained in more detail further below.

In the present example, the differential gear unit 34 is completely received in the reception space 32.

The differential gear unit 34 is also axially centered within the rotor 28.

Moreover, the drive module 20 comprises a first single-stage cylindrical gear unit 36 and a second single-stage cylindrical gear unit 38.

Both the first single-stage cylindrical gear unit 36 and the second single-stage cylindrical gear unit 38 are drivingly coupled to the differential gear unit 34. The first single-stage cylindrical gear unit 36 and the second single-stage cylindrical gear unit 38 are arranged on opposite sides of the differential gear unit 34.

Furthermore, the first single-stage cylindrical gear unit 36 comprises a first output interface 40. The first output interface 40 is rotatable around an axis which will be designated a second axis A2 of rotation in the following.

A first one of the rear wheels 18, or in short a first wheel 18a, is drivingly coupled to the first output interface 40 via a first drive shaft 42.

The first drive shaft 42 also extends along the second axis A2 of rotation and, thus, is rotatable around the second axis A2 of rotation. The same applies to the first wheel 18a.

The second single-stage cylindrical gear unit 38 comprises a second output interface 44. The second output interface 44 is rotatable around an axis which coincides with the second axis A2 of rotation.

A second one of the rear wheels 18, or in short a second wheel 18b, is drivingly coupled to the second output interface 44 via a second drive shaft 46.

The second drive shaft 46 also extends along the second axis A2 of rotation and, thus, is rotatable around the second axis A2 of rotation. The same applies to the second wheel 18b.

In the present example, an axial length L1 of the first drive shaft 42 equals an axial length L2 of the second drive shaft 46. Thus, the drive module 20 is arranged at the central position with respect to the width direction or Y axis of the vehicle 10. This has the advantage that so-called torque steer is avoided.

Furthermore, in the example of Figure 2, the first axis A1 of rotation and the second axis A2 of rotation are offset from one another by a distance D which in the present example extends along the Z direction. In other words, a middle axis of the first output interface 40 and a middle axis of the second output interface 44 are offset from a middle axis of the electric machine 22. This is due to the use of the first single-stage cylindrical gear unit 36 and the second single-stage cylindrical gear unit 38.

Due to this arrangement, the middle axis of the electric machine 22 or the first axis A1 of rotation is shifted towards higher positive Z values, i.e. in a height direction of the vehicle 10. This allows to have a sufficiently large clearance C between an underside of the electric vehicle 10, more precisely the drive module 20, and a road on which the electric vehicle 10 is traveling. This is especially the case when comparing the arrangement of Figure 2 to an arrangement where the electric machine 22 and the first output interface 40 and the second output interface 44 would be arranged coaxially,

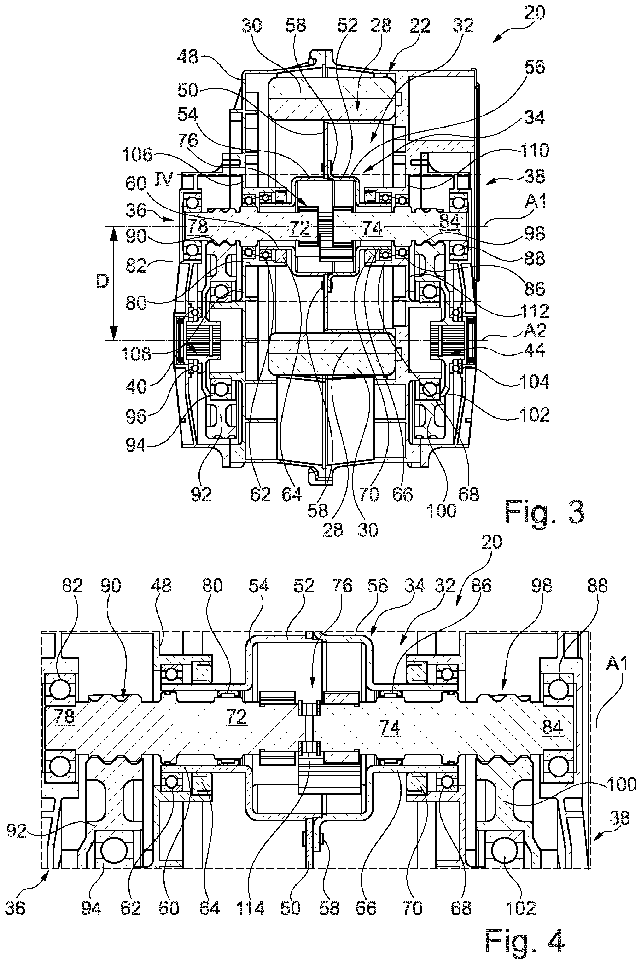

Figure 3 shows the drive module 20 in more detail.

The drive module 20 comprises a drive module housing 48. For the ease of explanation, this drive module housing 48 will be called the housing 48 in the following.

The stator 30 is fixedly mounted inside this housing 48.

As has been mentioned before, the rotor 28 is rotatably received inside the stator 30. Moreover, the rotor 28 defines the reception space 32 in which the differential gear unit 34 is arranged.

In the present example, the rotor 28 comprises a flange 50 which is arranged at an axially central position inside the reception space 32.

The differential gear unit 34 comprises a housing 52. The housing 52 has a substantially constant wall thickness and is made of sheet metal. More precisely, the housing 52 comprises a first half shell 54 and a second half shell 56. Both the first half shell 54 and the second half shell 56 are formed from sheet metal.

The first half shell 54 and the second half shell 56 are connected to one another in order to form the housing 52. Moreover, the housing 52 is fixedly connected to the flange 50 using bolts or rivets 58.

Consequently, the housing 52 may be considered as a power input interface of the differential gear unit 34.

Moreover, the first half shell 54 comprises a support flange 60 which is shaped as a tube section.

In a condition in which the housing 52 is mounted in the drive module 20, a middle axis of the support flange 60, i.e. of the tube section, coincides with the first axis A1 of rotation.

The first half shell 54 is rotatably supported in the housing 48 via a first bearing 62 which is arranged between an end of the support flange 60 and the housing 48. Moreover, the first support flange 60 serves as a sealing interface. More precisely, a first sealing 64 is arranged between the first support flange 60 and the housing 48.

Also the second half shell 56 comprises a support flange 66 which is shaped as a tube section.

In a condition in which the housing 52 is mounted in the drive module 20, a middle axis of the support flange 66, i.e. of the tube section, coincides with the first axis A1 of rotation.

The second half shell 56 is rotatably supported in the housing 48 via a second bearing 68 which is arranged between an end of the support flange 66 and the housing 48. Moreover, the support flange 66 serves as a sealing interface. More precisely, a second sealing 70 is arranged between the support flange 66 and the housing 48.

Altogether, the housing 52 and the rotor 28 fixedly connected thereto are rotatably supported in the housing 48 via the first bearing 62 and the second bearing 68.

The differential gear unit 34 further comprises a first output shaft 72 rotatable around the first axis A1 of rotation.

The differential gear unit 34 also comprises a second output shaft 74 rotatable around the first axis A1 of rotation.

In this context, the first output shaft 72 extends through an interior of the support flange 60 and the second output shaft 74 extends through an interior of the support flange 66.

This means that the first output shaft 72 and the second output shaft 74 extend from the housing 52 on opposite sides thereof.

The first output shaft 72 and the second output shaft 74, thus, may be considered as output interfaces of the differential gear unit 34.

In the example of Figure 3, the differential gear unit 34 comprises a cylindrical gear arrangement 76. This means that the differential gear unit 34 is a cylindrical gear differential. In the example shown in Figure 3, the cylindrical gear differential is a spur gear differential.

Since cylindrical gear differentials and their functionality is generally known in the art, a detailed explanation is omitted here. It is noted that in other variants, the differential gear unit may be formed as a bevel gear differential or as a planetary gear differential. Also these types of differential gear units are known as such.

The first output shaft 72 is drivingly coupled to a first input shaft 78, of the first cylindrical gear unit 36. In the present example, this is done in that the first output shaft 72 and the first input shaft 78 are formed integrally. This means that both functionalities are provided by a single shaft.

This shaft, i.e. the first output shaft 72 and the first input shaft 78 is rotatably supported in the housing 48 by a third bearing 80 and by a fourth bearing 82.

The third bearing 80 is located axially adjacent to the first bearing 62.

The fourth bearing 82 is located at an end of the first input shaft 78 which is remote from the differential gear unit 34.

Moreover, the third bearing 80 and the fourth bearing 82 are located at an axial distance. Thus, the single shaft forming the first output shaft 72 and the first input shaft 78 is rotatably supported on the housing 48 of the drive module 20 at two axially separate positions.

The second output shaft 74 is drivingly coupled to a second input shaft 84 of the second cylindrical gear unit 38. In the present example, this is done in that the second output shaft 74 and the second input shaft 84 are formed integrally. This means that both functionalities are provided by a single shaft.

This shaft, i.e. the second output shaft 74 and the second input shaft 84, is rotatably supported in the housing 48 by a fifth bearing 86 and a sixth bearing 88.

The fifth bearing 86 is located axially adjacent to the second bearing 68.

The sixth bearing 88 is located at an end of the second input shaft 84 which is remote from the differential gear unit 34.

Moreover, the fifth bearing 86 and the sixth bearing 88 are located at an axial distance. Thus, the single shaft forming the second output shaft 74 and the second input shaft 86 is rotatably supported on the housing 48 of the drive module 20 at two axially separate positions.

The first single-stage cylindrical gear unit 36 comprises a first helical gear 90 and a second helical gear 92 which are meshing with one another. A gear ratio of the first single-stage cylindrical gear unit 36 is 6:1. A diameter of the first helical gear 90 is smaller than a diameter of the second helical gear 92.

The first helical gear 90 is integrally formed on the first input shaft 78. In a mounted condition, the first helical gear 90 is arranged axially between the third bearing 80 and the fourth bearing 82.

Due to the fact that helical gears generate axial reaction forces, at least one of the third bearing 80 and the fourth bearing 82 needs to be able to support axial loads.

The second helical gear 92 is rotatably supported on the housing 48 via a seventh bearing 94. Moreover, the second helical gear 92 is axially supported on the housing 48 via an eighth bearing 96. The seventh bearing 94 and the eighth bearing 96 are separate bearings.

An axis of rotation of the second helical gear 92 corresponds to the second axis A2 of rotation.

The first output interface 40 is integrally formed on the second helical gear 92.

Consequently, the first output interface 40 and the first driveshaft 42 being coupled to the first wheel 18a may be driven using the electric machine 22. The necessary power is provided via the differential gear unit 34 and the first single-stage cylindrical gear unit 36.

The second single-stage cylindrical gear unit 38 comprises a third helical gear 98 and a fourth helical gear 100 which are meshing with one another. A gear ratio of the second single-stage cylindrical gear unit 38 is 6:1. A diameter of the third helical gear 98 is smaller than a diameter of the fourth helical gear 100.

The third helical gear 98 is integrally formed on the second input shaft 84. In a mounted condition, the third helical gear 98 is arranged axially between the fifth bearing 86 and the sixth bearing 88.

Due to the fact that helical gears generate axial reaction forces, at least one of the fifth bearing 86 and the sixth bearing 88 needs to be able to support axial loads.

The fourth helical gear 100 is rotatably supported on the housing 48 via a ninth bearing 102. Moreover, the fourth helical gear 100 is axially supported on the housing 48 via a tenth bearing 104. The ninth bearing 102 and the tenth bearing 104 are separate bearings.

An axis of rotation of the fourth helical gear 100 corresponds to the second axis A2 of rotation.

The second output interface 44 is integrally formed on the fourth helical gear 100.

Consequently, the second output interface 44 and the second driveshaft 46 being coupled to the second wheel 18b may be driven using the electric machine 22. The necessary power is provided via the differential gear unit 34 and the second single-stage cylindrical gear unit 38.

The first cylindrical gear unit 36 and the second cylindrical gear unit 38 are arranged symmetrically with respect to the electric machine 22 and with respect to the differential gear unit 34. This means that the first cylindrical gear unit 36 and the second cylindrical gear unit 38 have the same axial and radial distance from the electric machine 22 and the differential gear unit 34. Moreover, the first cylindrical gear unit 36 and the second cylindrical gear unit 38 are designed identically except for the fact that they are used on opposite sides, i.e. except for the mirror symmetry.

Moreover, in the example of Figure 3, an interior of the housing 52 is sealed with respect to an exterior of the housing 52 in an oil-tight manner. To this end, the first sealing 64 and the second sealing 70 are used.

Moreover, the housing 48 comprises a first inner wall 106, a second inner wall 108, a third inner wall 110, and a fourth inner wall 112 further delimiting spaces connected to an interior of the housing 52 with respect to an exterior of the housing 52.

Due to this arrangement, all the gear components of the drive module 20 may be lubricated, e.g. using oil. However, the components of the electric machine 22, i.e. the rotor 28 and the stator 30, may be kept free from oil.

Figure 4 shows a drive module 20 according to another example. In the following, only the differences with respect to the drive module 20 of Figure 3 will be mentioned. Otherwise, the explanations provided in connection with the example of Figure 3 also apply to the example of Figure 4.

Since the differences only relate to a portion of the drive module 20, only a portion of the drive module 20 is represented in Figure 4.

One difference relates to the support of the shaft forming the first output shaft 72 and the first input shaft 78 of the first single-stage cylindrical gear unit 36.

The third bearing 80 now is arranged between this shaft and the support flange 60 of the first half shell 54. Moreover, in contrast to the example of Figure 3, the third bearing 80 is a radial bearing, i.e. it is not configured to support axial loads.

Consequently, the shaft forming the first output shaft 72 and the first input shaft 78 now is radially supported in the housing 48 via the fourth bearing 82 and a combination of the first bearing 62 and the third bearing 80.

Similarly, the difference also relates to the support of the shaft forming the second output shaft 74 and the second input shaft 84 of the second single-stage cylindrical gear unit 38.

The fifth bearing 86 now is arranged between this shaft and the support flange 66 of the second half shell 56. Moreover, in contrast to the example of Figure 3, the fifth bearing 86 is a radial bearing, i.e. it is not configured to support axial loads.

Consequently, the shaft forming the second output shaft 74 and the first second shaft 84 now is radially supported in the housing 48 via the sixth bearing 88 and a combination of the second bearing 68 and the fifth bearing 86.

Furthermore, in contrast to the example of figure 3, the first output shaft 72 and the second output shaft 74 are axially supported on one another via an eleventh bearing 114. This bearing is configured to support axial loads which result from the helical gears 90, 92, 98, 100.

Also the arrangement of the sealings is different in the example of Figure 4.

The first sealing 64 and the second sealing 70 are identical to the example of Figure 3. However, the example of Figure 4 comprises a third sealing 116 arranged between the first output shaft 72 and the support flange 60 and a fourth sealing 118 arranged between the second output shaft 74 and the support flange 66. Thus, also in the example of Figure 4, an interior of the housing 52 is sealed with respect to an exterior of the housing 52 in an oil-tight manner.

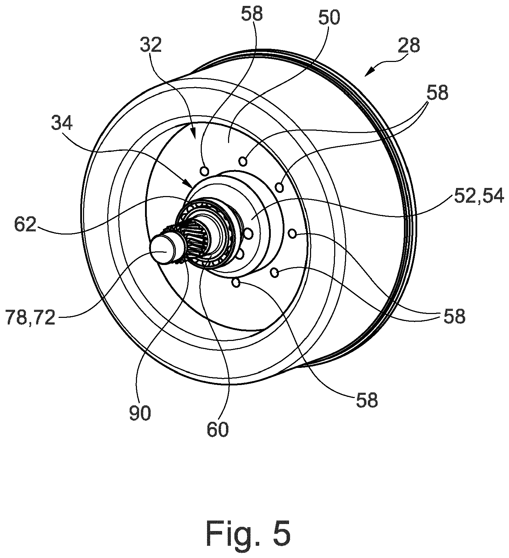

Figure 5 shows a sub-assembly of the drive module 20 of Figures 3 in a perspective view. This sub-assembly comprises the rotor 28 forming the reception space 32, the flange 50, and the differential gear unit 34. Moreover, the shaft forming the first output shaft 72 and the first input shaft 78 is shown. Also the first bearing 62 is represented.

Figure 5 further illustrates the position of the differential gear unit 34 within the reception space 32 and the design of the shaft integrally forming the first output shaft 72 and the first input shaft 78.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: electric vehicle
- 12: front axle assembly
- 14: front wheel
- 16: rear axle assembly, axle assembly
- 18: rear wheel
- 18a: first wheel
- 18b: second wheel
- 20: drive module
- 22: electric machine
- 24: traction battery
- 26: inverter unit
- 28: rotor
- 30: stator
- 32: reception space
- 34: differential gear unit
- 36: first single-stage cylindrical gear unit
- 38: second single-stage cylindrical gear unit
- 40: first output interface
- 42: first drive shaft
- 44: second output interface
- 46: second drive shaft
- 48: housing of the drive module
- 50: flange
- 52: housing of the differential gear unit
- 54: first half shell
- 56: second half shell
- 58: rivet
- 60: support flange of the first half shell
- 62: first bearing
- 64: first sealing
- 66: support flange of the second half shell
- 68: second bearing
- 70: second sealing
- 72: first output shaft
- 74: second output shaft
- 76: cylindrical gear arrangement
- 78: first input shaft of the first single-stage cylindrical gear unit
- 80: third bearing
- 82: fourth bearing
- 84: second input shaft of the second single-stage cylindrical gear unit
- 86: fifth bearing
- 88: sixth bearing
- 90: first helical gear
- 92: second helical gear
- 94: seventh bearing
- 96: eighth bearing
- 98: third helical gear
- 100: fourth helical gear
- 102: ninth bearing
- 104: tenth bearing
- 106: first inner wall
- 108: second inner wall
- 110: third inner wall
- 112: fourth inner wall
- 114: eleventh bearing
- A1: first axis of rotation
- A2: second axis of rotation
- C: clearance
- D: offset
- L1: axial length of the first drive shaft
- L2: axial length of the second drive shaft

## Claims

1. A drive module (20) for an electric vehicle (10), the drive module (20) comprising
an electric machine (22) having a rotor (28) and a stator (30), wherein the rotor (28) is at least partially ring-shaped and defines a reception space (32) provided radially and axially inside the rotor (28),
a differential gear unit (34),
a first single-stage cylindrical gear unit (36) having a first output interface (40) configured to be drivingly coupled to a wheel (18, 18a) and a second single-stage cylindrical gear unit (38) having a second output interface (44) configured to be drivingly coupled to a wheel (18, 18b),
wherein the differential gear unit (34) is at least partially arranged in the reception space (32) and wherein the differential gear unit (34) is drivingly coupled to the rotor (28), wherein the first cylindrical gear unit (36) and the second cylindrical gear unit (38) are arranged on opposite sides of the differential gear unit (34), and
wherein the first cylindrical gear unit (36) and the second cylindrical gear unit (38) are drivingly coupled to the differential gear unit (34).

2. The drive module (20) of claim 1, wherein the differential gear unit (34) is completely received in the reception space (32).

3. The drive module (20) of claim 1 or 2, wherein the differential gear unit (34) comprises a planetary gear arrangement, a cylindrical gear arrangement (76) or a bevel gear arrangement.

4. The drive module (20) of any one of the preceding claims, wherein the differential gear unit (34) comprises a housing (52) having a substantially constant wall thickness and/or wherein the differential gear unit (34) comprises a housing (52) made of a sheet material.

5. The drive module (20) of claim 4, wherein an interior of the housing (52) is sealed with respect to an exterior of the housing (52) in an oil-tight manner.

6. The drive module (20) of any one of the preceding claims, wherein the differential gear unit (34) is axially centered within the rotor (28).

7. The drive module (20) of any one of the preceding claims, wherein the first cylindrical gear unit (36) and the second cylindrical gear unit (38) are arranged symmetrically with respect to the electric machine (22) and/or with respect to the differential gear unit (34).

8. The drive module (20) of any one of the preceding claims, wherein the differential gear unit (34) comprises a first output shaft (72) rotatable around a first middle axis, wherein the first cylindrical gear unit (36) comprises a first input shaft (78), and wherein the first output shaft (72) and the first input shaft (78) are formed integrally, and/or
wherein the differential gear unit (34) comprises a second output shaft (74) rotatable around a second middle axis, wherein the second cylindrical gear unit (38) comprises a second input shaft (84), and wherein the second output shaft (74) and the second input shaft (84) are formed integrally.

9. The drive module (20) of claim 8, wherein an axial bearing (114) is arranged axially between the first output shaft (72) and the second output shaft (74).

10. The drive module (20) of claim 8 or 9, wherein each of the first output shaft (72) and the second output shaft (74) is radially supported on a drive module housing (48) at two axially separate positions.

11. The drive module (20) of any one of the preceding claims, wherein a middle axis of the first output interface (40) and a middle axis of the second output interface (44) are offset from a middle axis of the electric machine (22).

12. The drive module (20) of any one of the preceding claims, wherein each of the first cylindrical gear unit (36) and the second cylindrical gear unit (38) has a gear ratio of 5:1 or more.

13. The drive module (20) of any one of the preceding claims, wherein each of the first cylindrical gear unit (36) and the second cylindrical gear unit (38) comprises helical gears (90, 92, 98, 100).

14. An axle assembly (16) for an electric vehicle (10), comprising a drive module (20) according to any one of the preceding claims, wherein a first wheel (18a) is drivingly coupled to the first output interface (40) via a first drive shaft (42) and a second wheel (18b) is drivingly coupled to the second output interface (44) via a second drive shaft (46), and wherein an axial length (L1) of the first drive shaft (42) equals an axial length (L2) of the second drive shaft (46).

15. An electric vehicle (10) comprising a drive module (20) of any one of claims 1 to 13 and/or an axle assembly (16) of claim 14.
